# NEUE EUROPÄISCHE PATENTSCHRIFT

(11) **EP 0 368 038 B2**
(45) Veröffentlichungstag und Bekanntmachung des Hinweises auf die Entscheidung über den Einspruch: **15.10.1997**
(45) Hinweis auf die Patenterteilung: 28.07.1993
(21) Anmeldenummer: 89119236.1
(22) Anmeldetag: 17.10.1989
(51) Int. Cl.: H02K 3/34

(54) **Hochspannungsisoliersystem für elektriche Maschinen**
High voltage insulation system for electric machines
Système d'isolation de haute tension pour machines électriques

(30) Priorität: 10.11.1988 CH 4168/88
(43) Veröffentlichungstag der Anmeldung: 16.05.1990
(73) Patentinhaber: ASEA BROWN BOVERI AG, 5400 Baden (CH)
(72) Erfinder: Lipták, Gabor, CH-5400 Baden (CH); Schuler, Roland, CH-5430 Wettingen (CH)

(56) Entgegenhaltungen:
- EP-A- 0 062 602
- AT-A- 238 811
- CH-A- 342 276
- CH-A- 388 403
- CH-A- 558 979
- CH-A- 559 451
- DE-A- 1 488 725
- FR-A- 2 230 110
- GB-A- 996 901
- US-A- 3 662 199
- US-A- 4 769 276
- Technische Mitteilungen der Firma ISOVOLTA betreffend die Teileiterisolierung Conductherm B
- Technische Mitteilungen der Firma ISOVOLTA betreffend die Teileiterisolierung Conductofol VP 264

## Beschreibung

### Technisches Gebiet

Die Erfindung bezieht sich auf ein Hochspannungsisoliersystem für elektrische Maschinen, umfassend eine Windungsisolation und eine Hauptisolation, bei welcher Windungsisolation auf einen vorzugsweise lackisolierten Teilleiter ein mindestens drei Schichten aufweisendes Isolierband um den Teilleiter gewickelt und mit diesem verklebt ist, welches Isolierband eine mittlere, um wesentlichen Glimmer enthaltende Schicht umfasst, die beidseits von Kunststoff-Folien abgedeckt ist, die Teilleiter zu Wicklungen oder Stäben zusammengefasst von einer Hauptisolation umgeben und in den Stator der elektrischen Maschine eingebaut und als Ganzes mit Tränkharz imprägniert werden, das anschliessend in der Wärme ausgehärtet wird.

Die Erfindung bezieht sich dabei auf einen Stand der Technik, wie er sich beispielsweise aus der CH-PS 559 451 ergibt.

### Technologischer Hintergrund und Stand der Technik

Zur Isolierung der Statorwicklungen von rotierenden Maschinen insbesondere Hochspannungsmotoren hat sich in den letzten Jahren die Ganztränktechnik stark durchgesetzt. Die Wicklungselemente für diese Maschinen sind aus konstruktiven Gründen als sogenannte Ganzformspulen aufgebaut. Vor allem bei stossartiger Spannungsbeanspruchung (Schalt- und sonstige Überspannungen mit kurzer Frontdauer) wird die Windungsisolation extrem beansprucht und stellt den isolationstechnisch schwächsten Teil der Statorwicklung dar. In der Vergangenheit sind in der Literatur zahlreiche Störungsfälle beschrieben, die auf ein Versagen der Windungsisolation zurückzuführen sind.

Die Isolierung zwischen benachbarten elektrischen Windungen (= Windungsisolierung = turn-to-turn insulation) muss mehreren Anforderungen genügen, damit eine hohe Betriebssicherheit gewährleistet werden kann.

Die Anforderungen werden im Hinblick auf die verschiedenen Beanspruchungen gestellt, welche die Windungsisolierung bereits bei der Verarbeitung des meistens bandförmigen Isoliermaterials (Umwickeln des Bandes um den Wickeldraht, Profildraht), Formen der Spulen (d.h. Biegen auf Hoch- und Flachkant), sowie während der weiteren Herstellungsphasen (z.B. Imprägnieren, Aushärten), div. Prüfungen und dann im Betrieb dauernd bzw. wiederholt, stosartig erfährt.

In der Folge muss ein zum Isolieren der Windungen verwendetes Band hohe Flexibilität bei gleichzeitiger hoher mechanischer Belastbarkeit aufweisen. Bisherige Lösungen liessen diesbezüglich zu wünschen übrig, da diese z.T. entgegengesetzten Anforderungen nur teilweise erfüllt werden konnten. Die guten Eigenschaften der Glimmerschicht wie z.B. derer elektrische Barrierewirkung wurde infolge mech. Beanspruchungen z.T. deutlich verringert.

Im weiteren muss die Windungsisolierung eine hohe Glimmbeständigkeit bei erhöhter (Betriebs)-Temperatur aufweisen. Das dielektrische Langzeitverhalten bisheriger Lösungen erwies sich nach Literaturangaben in manchen Fällen als ungenügend.

Sehr wesentlich ist die ausreichend hohe Stossspannungsfestigkeit (auch der gealterten Windungsisolierung). Neueste IEC-Empfehlungen schreiben eine minimale Stossspannungsfestigkeit von 0,5 (4 U_{N} + 1) kV [Scheitelwert] vor, wobei U_{N} = Nennspannung in kV_{eff} ist, pro Spule! Für eine Maschine mit U_{N} = 15 kV bedeutet dies eine Windungsisolation mit einer Stossfestigkeit von mehr als 30,5 kV.

Zudem müssen die Komponenten der Windungsisolierung chemisch gegenüber den Imprägnierharzen/-Lacken beständig sein. Im weiteren wird eine gute Verklebung der Windungsisolierung sowohl mit dem (lackierten) Wicklungsdraht wie mit der sog. Hauptisolierung der Spulen (d.h. Isolierung gegen geerdetes Eisen) verlangt, um eine gesamthaft homogene Struktur der Haupt/Windungsisolierung zu erreichen.

Ferner ist es von wirtschaftlicher Bedeutung, dass die Windungsisolierung einen möglichst kleinvolumigen Platz (im Vergleich zum "aktiven Material" wie Kupferdraht) benötigt und sie sich kostengünstig herstellen und applizieren lässt.

Die Windungsisolation nach der CH-Patent-schrift 559 451 besteht aus vier Schichten: einer Glimmerschicht von etwa 100 µm , einem dünnen Glasgewebe (als Träger für die Glimmerschicht) und beidseitigen Deckschichten mit einer Dicke von etwa 8-10 µm aus Polycarbonat-Folie. Die aus Glasgewebe und Glimmer bestehende mittlere Lage des Isolierbandes ist mittels eines lösungsfreien Bindemittels, vorzugsweise Epoxidharz im B-Zustand, mit den beiden Deckfolien verklebt. Nach dem Aufbringen der Teilleiterisolation und Formen der isolierten Leiter zu Spulen tritt bei der Druck- und Wärmebehandlung überschüssiges Harz an den Überlappungsstellen des Bandes aus und verklebt das Isolierband mit den Einzelleitern und die Einzelleiter miteinander. Nach dem Aushärten des Harzes wird das derart vorverfestigte Leiterbündel mit der (trockenen) Hauptisolation versehen und diese dann im sogenannten Ganztränkverfahren weiterbehandelt.

Dieses bekannte Verfahren hat sich in der Vergangenheit bestens bewährt, erforderte jedoch einen vergleichsweise zeitaufwendigen Zwischenschritt, auf den nicht verzichtet werden konnte. Ohne diesen ist nämlich nicht sichergestellt, dass das Harz aus der besagten Glimmer/Glasgewebeschicht an den Überlappungsstellen des Isolierbandes auch im gewünschten und notwendigen Mass austritt. Auch musste das Harzsystem der Hauptisolation genau auf die Deckfolien abgestimmt werden, um eine perfekte hohlraumfreie Verklebung zwischen Teilleiterisolation und Hauptisolation zu gewährleisten.

Spätere Vorschläge für Isolierbänder für die Windungsisolation, z.B. nach dem Konferenzbericht "Teilleiterisolation auf Glimmerbasis für Hochspannungsmaschinen", verteilt am 3. Internationalen ASTA-Symposium 5.-7. Mai 1987 in Baden bei Wien, haben aus diesem Grunde auf einer der beiden Deckfolien verzichtet, wobei bei mehrlagigen Isolierbändern extrem dünne Abdeckfolien zur Verwendung kommen.

Mit diesen bekannten Isolierbändern wird jedoch das oben aufgezeigte Verklebungsproblem nur teilweise gelöst.

Gegenstand der GB-A-996901 ist ein Hochspannungsisoliersystem, bestehend aus einem mehrere Schichten aufweisenden Isolierband. Das Isolierband weist eine Schicht aus Glimmerflocken auf, die von Asbest- oder Glimmerpapieren beidseitig abgedeckt ist. Bei diesem Isolierband wird eine seiner Aussenschichten mit einem Klebemittel versehen, das bei der Wärmebehandlung zu einer Befestigung des Isolierbandes auf dem Leiter führt. Das bekannte Isolierband ist jedoch offensichtlich zur Herstellung der Hauptisolation vorgesehen. Mit Bändern dieser Art Teilleiterisolationen herzustellen, kommt schon aus Gründen des Füllfaktors nicht in Frage

Aus dem Firmenprospekt P0550-3.Okt.1988 "Elektro-Isolierstoffe" der Firma ISOVOLTA Österreichische Isolierstoffwerke Aktiengesellschaft, A-2351 Wiener Neudorf, ist ein mit "Conductherm B" bezeichnetes Isolierband zur Isolation von Flachkupferdrähten bekannt. Es weist eine Glimmerschicht auf, die beiseitig von Polyesterfolien abgedeckt ist. Die Dicke der Polyesterfolie auf der Kupferseite beträgt 0,006 mm, die auf der Aussenseite ist 0,023 mm dick, ist also etwa viermal so dick wie die dem Kupfer zugewandte.

### Kurze Darstellung der Erfindung

Ausgehend vom Stand der Technik liegt der Erfindung die Aufgabe zugrunde, ein Hochspannungsisolationssystem zu schaffen, das eine hochwertige Windungsisolation mit kleinem Platzbedarf ermöglicht.

Das erfindungsgemässe Hochspannungsisoliersystem ist dadurch gekennzeichnet, dass die Teilleiter mit einem Isolierband umwickelt werden, dessen zumindest die zum Teilleiter gerichtete Aussenfläche mit einem Klebemittel versehen ist, das bei der Wärmebehandlung zumindest die Verklebung des Isolierbandes mit den Teilleitern bewirkt dass die den Teilleitern zugenwandte Kunststoff-Folie um den Faktor 1,5 bis 3 dicker ist als die andere Kunststoff-Folie.

Dabei können einerseits Isolierbänder verwendet werden, die in an sich bekannter Weise von vornherein mit einem Schmelzkleber, vorzugsweise ein Tränkharz im B-Zustand, versehen sind (vgl. US-A-3662199), andererseits kann das Aufbringen des Klebers auch unmittelbar vor dem Umwickeln erfolgen.

### Kurze Beschreibung der Zeichnungen

In der Zeichnung sind in schematischer Darstellung Ausführungsbeispiele der Erfindung dargestellt; dabei zeigt
- Fig.1: einen Längsschnitt durch ein Isolierband für die Windungsisolation von Teilleitern;
- Fig.2: einen Querschnitt durch die Statorwicklung einer elektrischen Maschine;
- Fig.3: eine vergrösserte Darstellung des Details X aus Fig.2

### Wege zur Ausführung der Erfindung

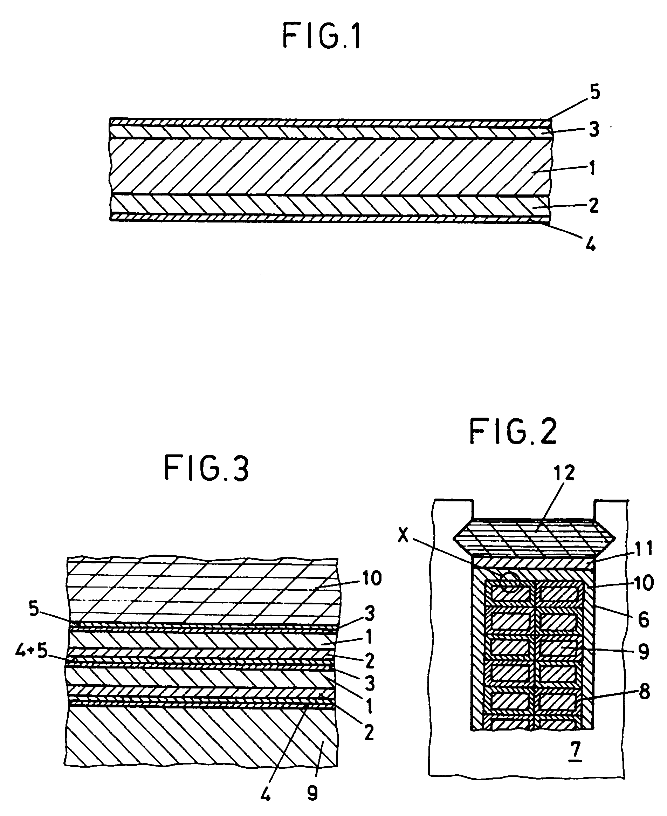

Im Längsschnitt durch ein Isolierband gemäss Fig.1 ist eine mit 1 bezeichnete Glimmerschicht von ca. 40 um Dicke, die mit einem Bindemittel, z.B. modifiziertes Epoxid-Harz im B-Zustand, getränkt ist, auf beiden Seiten von Kunststoff-Folien 2,3 unterschiedlicher Dicke abgedeckt. Beide Kunststoff-Folien 2,3 bestehen aus modifiziertem PETP oder Polyimid, wobei die beim späteren Aufbringen auf den mit einer Lackisolation versehenen Teilleiter dem Teilleiter zugewandte Folie - im Beispielsfall die Folie 2 - um den Faktor 1,5 bis 3 mal dicker ist als die andere Folie 3. Die Folie 2 bestimmt dabei im wesentlichen die für die Verarbeitung des Isolierbandes wichtigen mechanischen Eigenschaften (Reissfestigkeit) und Träger des empfindlichen Glimmerbandes, während die dünne Deckfolie praktisch nur Schutzfunktionen ausübt und aufgrund ihrer geringen Dicke eher gedehnt werden kann. Die äusseren Oberflächen der Folien 2 und 3 sind mit einem Schmelzkleber 4,5 beschichtet. Die Schichtdicke des Schmelzklebers beträgt typisch 5 um. Er besteht in der Regel aus einem Phenoxyharz im B-Zustand.

Fig.2 vermittelt im groben, Fig.3 im Detail den Aufbau des erfindungsgemässen Isoliersystems. In einer Nut 6 im Statorblechkörper 7 der elektrischen Maschine ist ein aus einer Vielzahl gegeneinander mittels einer Windungsisolation 8 isolierter Teilleiter 9 angeordnet. Das Teilleiterbündel ist von einer Hauptisolation 10 umgeben. Das Bündel ist unter Zwischenschaltung einer Unterlage 11 mittels eines Nutkeils 12 fixiert.

In Fig.3 ist das Detail X aus Fig.2 in stark vergrössertem Massstab veranschaulicht; man erkennt deutlich den im Beispielsfall zweibogigen Aufbau der Windungsisolation und die zu einer einzigen Schicht 4+5 verschmolzenen Kleberschichten 5 der unteren Lage und Kleberschicht 4 der oberen Lage der Isolierbänder.

Das Verfahren zur Herstellung von Wicklungen, dessen Ablauf in Fig.2 veranschaulicht ist, vollzieht sich in folgenden Verfahrensschritten. Die
A. Herstellung des Isolierbandes gemäss Fig.1
B. Umwickeln der lackisolierten Teilleiter mit dem Isolierband
C. Formen und Zusammenfassen der Teilleiter zu Spulen oder Halbspulen
D. Aufbringen der Hauptisolation
E. Einlegen der Spulen oder Halbspulen in die Nuten (des Stator)
F. Herstellen der Schaltverbindungen im Wickelkopf
G. Ganztränken des fertig bewickelten Statorkörpers im Tränkgefäss
H. Wärmebehandlung des imprägnierten Stators in einem Trockenofen

Von erfindungswesentlicher Bedeutung sind hierbei die sich in den Stufen G und H abspielenden Prozesse, welche entscheidend die Qualität der geamten Isolation beeinflussen:

Die zwischen der Folie 2 und der Lackisolation der Teilleiter liegende Schmelzkleberschicht 4 schmilzt während der Wärmebehandlung und verklebt die Folie 2 mit dem Teilleiter, ohne dass es einer "Harzreserve" aus der Glimmerschicht 1 bedarf. Infolge Kapillarwirkung werden darüber hinaus auch unvermeidliche Hohlräume beim über- oder anlappenden (auf Stoss) Wickeln ausgefüllt. Die andere Schmelzkleberschicht 5 dient einerseits der Verklebung übereinanderliegender Isolierbandlagen und andererseits als Haftvermittler zwischen der äusseren Isolierbandlage und der Hauptisolation.

Anstelle eines bereits z.B. beim Isolierbandhersteller mit Schmelzkleberschichten 4,5 versehenen Isolierbandes kann dieser Kleber erst kurz vor dem Umwickeln der Teilleiter aufgebracht werden, wobei darauf zu achten ist, dass der Schmelzkleber zum Zeitpunkt des Umwickelns gut angetrocknet ist, um die Handhabung der isolierten Leiter zu vereinfachen.

Das erfindungsgemässe Isolierband ermöglicht eine thermisch und dielektrisch hochwertige Windungsisolierung gegenüber konventionellen Lösungen mit vermindertem Platzbedarf und niedrigeren Kosten und sehr guter Verarbeitbarkeit. Die Vorteile ergeben sich aus dem speziellen Aufbau der Bandkombination (Glimmerschicht und Träger bzw. Gleitbändern), wobei vor allem die zwei Kunststofffilme unterschiedlicher Dicke und die Kombination mit aussen aufgebrachtem Schmelzkleber hervorzuheben ist.

Umfangreiche Versuche haben ergeben, dass die "elektrische" Lebensdauer bei erhöhter Temperatur (140°C) um den Faktor 5...8 mal länger als bei üblichen Lösungen und die Stossfestigkeit (an fertigen Spulen gemessen) ca. 3 mal höher ist. Mit der beschriebenen Windungsisolation versehene Motorwicklungen müssen daher nicht zusätzlich mit einem Überspannungsschutz versehen werden.

## Patentansprüche

1. Hochspannungsisoliersystem für elektrische Maschinen, umfassend eine Windungsisolation und eine Hauptisolation, bei welcher Windungsisolation auf einen lackisolierten Teilleiter ein mindestens drei Schichten aufweisendes Isolierband um den Teilleiter gewickelt und mit diesem verklebt ist, welches Isolierband eine mittlere, im wesentlichen Glimmer enthaltende Schicht (1) umfasst, die beidseits von Kunststoff-Folien (2,3) abgedeckt ist, die Teilleiter zu Wicklungen oder Spulen zusammengefasst von einer Hauptisolation umgeben und in den Stator der elektrischen Maschine eingebaut und als Ganzes mit Tränkharz imprägniert werden, das anschliessend in der Wärme ausgehärtet wird, dadurch gekennzeichnet, dass die Teilleiter mit einem Isolierband umwickelt werden, dessen zumindest die zum Teilleiter gerichtete Aussenfläche mit einem Klebemittel (4,5) versehen ist, das bei der Wärmebehandlung zumindest die Verklebung des Isolierbandes mit den Teilleitern bewirkt, dass die den Teilleitern zugewandte Kunststoff-Folie (2) um den Faktor 1,5 bis 3 dicker ist als die andere Kunststoff-Folie (3).

2. Hochspannungsisoliersystem nach Anspruch 1, gekennzeichnet durch die Verwendung von Folien auf Polyester- oder Polyimid-Basis mit einer Dicke von 18 bis 50 µm für dickere bzw. 10 bis 30 um für die dünnere Folie.

3. Hochspannungsisoliersystem nach Anspruch 1 oder 2, gekennzeichnet durch die Verwendung von Glimmerschichten (1) oder Glimmerbändern mit einer Dicke zwischen 40 und 60 µm.

4. Hochspannungsisoliersystem nach einem der Ansprüche 1 bis 3, dadurch gekennzeichnet, dass die Kleberschicht(en) (4,5) aus Schmelzkleber, vorzugsweise einem lösungsmittelfreien Tränkharz im B-Zustand, bestehen und zwischen 3 und 8 µm dick sind.

## Claims

1. High-voltage insulating system for electric machines, comprising a turn-to-turn insulation and a main insulation, in which turn-to-turn insulation an insulating tape, exhibiting at least three layers, is wound, onto an enamel-insulated conductor element, around the conductor element and is bonded to the latter, which insulating tape comprises a centre layer (1) which essentially contains mica and which is covered on both sides by plastic foils (2,3), the conductor elements, combined to form windings or coils, are surrounded by a main insulation and installed in the stator of the electric machine and are impregnated as a whole with impregnating resin which is subsequently cured in heat, characterised in that an insulating tape, at least the outer surface, directed towards the conductor element, of which is provided with a bonding agent (4,5) which at least causes the insulating tape to be bonded to the conductor elements during the heat treatment, is wound around the conductor elements, that the plastic foil (2) facing the conductor elements is thicker than the other plastic foil (3) by a factor of 1.5 to 3.

2. High-voltage insulating system according to Claim 1, characterised in that polyester- or polyimide-based foils having a thickness of 18 to 50µ for the thicker or 10 to 30 µm for the thinner foil are used.

3. High-voltage insulating system according to Claim 1 or 2, characterised in that mica layers (1) or mica tapes having a thickness of between 40 and 60 µm are used.

4. High-voltage insulating system according to one of Claims 1 to 3, characterised in that the adhesive layer(s) (4,5) consist of thermoplastic adhesive, preferably a solventless impregnation resin in the B state, and are between 3 and 8 µm thick.

## Revendications

1. Système d'isolation haute tension pour machines électriques, comprenant une isolation de bobinage et une isolation principale, l'isolation de bobinage réalisée sur un conducteur élémentaire isolé par vernissage comprenant une bande isolante présentant au moins trois couches, qui est enroulée autour du conducteur élémentaire et collée à celui-ci, cette bande isolante comprenant une couche médiane (1) contenant principalement du mica qui est recouverte des deux côtés d'une pellicule de matière plastique (2, 3), les conducteurs élémentaires rassemblés en bobinages ou bobines, étant enrobés d'une isolation principale, étant incorporés dans le stator de la machine électrique, et étant dans leur totalité imprégnés d'une résine d'imprégnation qui est ensuite durcie à la chaleur, caractérisé en ce que les conducteurs élémentaires sont entourés d'une bande isolante dont au moins la face extérieure tournée vers le conducteur élémentaire est dotée d'un adhésif (4, 5) qui lors du traitement thermique assure au moins le collage de la bande isolante sur les conducteurs élémentaires, et en ce que la pellicule de matière plastique (2) tournée vers les conducteurs élémentaires présente une épaisseur supérieure d'un facteur de 1,5 à 3 à celle de l'autre pellicule de matière plastique (3).

2. Système d'isolation haute tension selon la revendication 1, caractérisé par l'utilisation de pellicules à base de polyester ou de polyimide d'une épaisseur de 18 à 50 µm pour la pellicule la plus épaisse et de 10 à 30 µm pour la pellicule la plus mince.

3. Système d'isolation haute tension selon la revendication 1 ou 2, caractérisé par l'utilisation de couches (1) ou bandes de mica d'une épaisseur comprise entre 40 et 60 µm.

4. Système d'isolation haute tension selon l'une des revendications 1 à 3, caractérisé en ce que la ou les couches de colle (4, 5) sont constituées d'une colle fusible, de préférence d'une résine d'imprégnation sans solvant à l'état B, et ont une épaisseur de 3 à 8 µm.
